# EUROPEAN PATENT APPLICATION

(11) **EP 2 891 707 A1**
(43) Date of publication of application: **08.07.2015**
(21) Application number: 13833584.9
(22) Date of filing: 30.08.2013
(51) Int. Cl.: C12G 3/04, B67D 1/07, G07F 13/06

(54) **DEVICE FOR PRODUCING ALCOHOLIC BEVERAGE AND RECORDING MEDIUM**

(30) Priority: 31.08.2012 JP 2012191893
(71) Applicant: INA. World Corporation, Hyogo 669-5228 (JP)
(72) Inventor: HAYASHI, Kouichi, Osaka 5610836 (JP); INAZU, Tomohiko, Osaka 5410048 (JP)
(74) Representative: Zimmermann, Tankred Klaus
(86) International application number: PCT/JP2013/073254
(87) International publication number: WO 2014/034826

(57) **Abstract**

There is provided an alcoholic beverage producing apparatus for making a plurality of kinds of alcohol-containing liquid substances. The alcoholic beverage producing apparatus includes: a data acquisition unit that specifies an alcohol-containing liquid substance which a user desires among the plurality of kinds of alcohol-containing liquid substances as a requested liquid substance and creates selection instruction data; and a liquid crystal display and LEDs, both of which display a work procedure pertaining to a provided substance using the requested liquid substance shown in selection instruction data.

## Description

### TECHNICAL FIELD

The present invention relates to a technology for supporting an operator's operation in an alcoholic beverage producing apparatus which produces an alcoholic beverage by mixing hot water, water, sweetener, a juice, various kinds of beverages, or other types of liquors etc. in a certain liquor.

### BACKGROUND ART

These days, a cocktail and a Shochu, i.e. a Japanese clear distilled liquor, attract attention as alcoholic beverages provided in a tavern, a restaurant, etc. For example, a cocktail is produced by mixing a juice, a soda, other liquors, etc. with a liquor as a base and is provided. A Shochu can also be provided with hot water or water mixed therein. Such a mixed liquor is a beverage which is generally produced in a location as a providing place by mixing liquids as materials. It is rather rare for such a mixed liquor to be laid in stock in an already-mixed state and to be provided as it is. That is, a mixed liquor requires work in a providing place, and a person having special skill has been required both at home and in business.

Accordingly, there is also known a displaying tool which displays a cocktail recipe so that a mixed liquor can be made easily without special knowledge (for example, Patent Document 1). According to a technology described in Patent Document 1, a mixed liquor can be made without memorizing a recipe in advance or without seeing a memo at the time of making the mixed liquor. Therefore, a person who does not have special knowledge about a recipe can make a mixed liquor such as a cocktail and a Shochu.

However, the technology described in Patent Document 1 is a technology on the premise that a mixed liquor is made by a person, and there is no change in that the person is required to make the mixed liquor. Therefore, there has been a problem that the technology described in Patent Document 1 seldom contributes to laborsaving in a location which provides a mixed liquor.

Accordingly, there has conventionally been proposed an apparatus which automatically make a mixed liquor such as a cocktail. For example, such apparatuses are described in Patent Documents 2 to 4. In a technology described in Patent Documents 2 to 4, since the preparation of materials (the mixing of materials) is performed automatically, not only memorizing a recipe but also preparation work by human power is not necessary, thus the achievement of laborsaving in a location being expected.

### PATENT LITERATURE

Patent Document 1: JP 2005-084118 A
Patent Document 2: JP H9-290898 A
Patent Document 3: JP 2004-075086 A
Patent Document 4: JP 2011-530299 W

### SUMMARY OF INVENTION

### SOLUTION TO PROBLEM

However, a public-oriented location such as a tavern is strongly required to provide a product at low cost, and even if it is the same location, there exists a situation where demand for the suppression of labor cost is more serious compared with a bar in a hotel etc. Moreover, when a cocktail is provided as a product (a menu item), for example, there arises a problem about matters pertaining to dishing: what kind of glass is used ?; are ice cubes needed or not ? (how many ice cubes are needed ?); is a straw needed or not ? ; or is fruit attached or not ? That is, in a public-oriented location such as a tavern, time required for completing one product to be provided, which is set for each location, needs to be shortened as much as possible. It is insufficient that a mixed liquor is just automatically made, and how easily and how fast an ordered "product" is completed and provided has become an important issue.

However, although Patent Document 2 describes in a minimum level that a cocktail selected with a selection button is made automatically, there is no detailed description, for example, with insufficient consideration about the operability of an apparatus. Patent Document 2 describes an apparatus which automatically puts the salt on a glass if needed for a cocktail that is going to be made. However, work specialized in such a specific cocktail, if automated, just requires long processing time for completing one cocktail, lowering efficiency and also causing large increase in cost due to hardware for automation and the like. Thus, cost effectiveness cannot be expected. That is, the technology described in Patent Document 2 is too much biased toward the viewpoint of mere automation, and cannot meet the needs of an actual field.

Moreover, in a technology described in Patent Document 3, since a mixed liquor is necessarily put into a shaker, in order to provide the mixed liquor as a product to a customer, separate work is necessary to transfer it into a glass after mixing (shaking). That is, it is a technology that reduces the burden of a bartender (an exclusive clerk), but is not a technology that eliminates the need of the exclusive clerk itself.

A technology described in Patent Document 4 relates to an apparatus which makes more than a thousand kinds of mixed liquors. The object of this technology is primarily not to be introduced to a public-oriented location, and also there is no description about operability and the like. If more than a thousand kinds of mixed liquors are made, from an inverse point of view, there is needed a framework in which these can be provided as products without confusion.

That is, when a public-oriented location is assumed, all the technologies described in Patent Documents 2 to 4 are aimed only at reducing the making work of a mixed liquor, and lack the total viewpoint of reducing the making work of a "product" using a mixed liquor. Therefore, the effect of reducing labor cost is limited if compared to the cost of introducing an apparatus. Although there actually exist a lot of needs that people in the industry want to provide a menu using mixed liquors inexpensively, it is not an exaggeration to say that such an apparatus is not accepted at all in the market. In this way, even if the technologies described in Patent Documents 1 to 4 are employed, there has been a problem that cost reduction effect is still insufficient in a public-oriented location such as a tavern.

### SOLUTION TO PROBLEM

In order to solve the above subject, a first aspect of the invention according to claim 1 is configured such that: an alcoholic beverage producing apparatus that makes a plurality of kinds of alcohol-containing liquid substances comprises: a specifying element that specifies an alcohol-containing liquid substance which a user desires among the plurality of kinds of alcohol-containing liquid substances as a requested liquid substance; and a displaying element that displays a work procedure pertaining to a provided substance using the requested liquid substance.

A second aspect of the invention according to claim 2 is configured such that: in the alcoholic beverage producing apparatus according to claim 1, a work procedure displayed on the displaying element includes a work procedure that should be performed by a user before the making of the requested liquid substance is started.

A third aspect of the invention according to claim 3 is configured such that: in the alcoholic beverage producing apparatus according to claim 1, the work procedure displayed on the displaying element includes a dishing work procedure, for the requested liquid substance, for completing the provided substance.

A fourth aspect of the invention according to claim 4 is configured such that: in the alcoholic beverage producing apparatus according to claim 1, the work procedure displayed on the displaying element includes the completed image of the provided substance.

A fifth aspect of the invention according to claim 5 is configured such that: in the alcoholic beverage producing apparatus according to claim 1, an input vessel is a providing vessel that is used when the provided substance is provided.

A sixth aspect of the invention according to claim 6 is configured such that: in the alcoholic beverage producing apparatus according to claim 5, a work procedure displayed on the displaying element includes the position of a liquid surface in the providing vessel.

A seventh aspect of the invention according to claim 7 is configured such that: the alcoholic beverage producing apparatus according to claim 1 further comprises a touch-panel type input device.

An eighth aspect of the invention according to claim 8 is configured such that: in the alcoholic beverage producing apparatus according to claim 7, the displaying element displays a start instruction receiving image for receiving the making starting instruction of the requested liquid substance by a user, and the touch-panel type input device detects a user's operation for the start instruction receiving image and receives the detected information as information for the making starting instruction of the requested liquid substance.

A ninth aspect of the invention according to claim 9 is configured such that: in the alcoholic beverage producing apparatus according to claim 7, the displaying element displays a selection instruction receiving image for receiving a selection instruction for an alcohol-containing liquid substance which a user desires among the plurality of kinds of alcohol-containing liquid substances, and the touch-panel type input device detects a user's operation for the selection instruction receiving image and receives the detected information as the selection instruction information of the alcohol-containing liquid substance which the user desires, and the specifying element specifies the requested liquid substance according to the selection instruction information which the touch-panel type input device has received.

A tenth aspect of the invention according to claim 10 is configured such that: in the alcoholic beverage producing apparatus according to claim 9, the selection instruction receiving image includes a plurality of selection button images which correspond to the plurality of kinds of alcohol-containing liquid substances one-on-one, and the displaying element can change the displaying position of the plurality of selection button images in the selection instruction receiving image.

An eleventh aspect of the invention according to claim 11 is configured such that: in the alcoholic beverage producing apparatus according to claim 10, the displaying element changes the displaying position according to the frequency of making each of the plurality of kinds of alcohol-containing liquid substances.

A twelfth aspect of the invention according to claim 12 is configured such that: in the alcoholic beverage producing apparatus according to claim 9, the displaying element displays the selection instruction receiving image according to whether or not each of the plurality of kinds of alcohol-containing liquid substances can be made.

A thirteenth aspect of the invention according to claim 13 is configured such that: in a recording medium having a program, recorded thereon, which a computer with a displaying element can read, the program is executed by the computer such that the computer comprises: a specifying element that specifies an alcohol-containing liquid substance which a user desires among a plurality of kinds of alcohol-containing liquid substances as a requested liquid substance; and a display control element that lets the displaying element display a work procedure pertaining to a provided substance using the requested liquid substance, wherein the computer functions as an alcoholic beverage producing apparatus for making the plurality of kinds of alcohol-containing liquid substances.

### ADVANTAGEOUS EFFECT OF INVENTION

The aspects of the invention according to claims 1 to 13 comprise a specifying element that specifies an alcohol-containing liquid substance which a user desires among a plurality of kinds of alcohol-containing liquid substances as a requested liquid substance and a displaying element that displays a work procedure pertaining to a provided substance using the requested liquid substance. With these aspects of the invention, any user can understand a work procedure pertaining to a provided substance and complete the provided substance correctly and quickly.

### BRIEF DESCRIPTION OF DRAWINGS

FIG. 1 is a view illustrating an alcoholic beverage producing apparatus.
FIG. 2 is a block diagram illustrating each of components which the alcoholic beverage producing apparatus comprises.
FIG. 3 is a diagram illustrating functional blocks, which the alcoholic beverage producing apparatus comprises, together with data flows.
FIG. 4 is a view illustrating a selection instruction receiving image.
FIG. 5 is a view illustrating another selection instruction receiving image.
FIG. 6 is a view illustrating the work procedure displaying screen of a "Screwdriver".
FIG. 7 is a view illustrating a state where a liquid substance has been made in a setting part.

### REFERENCE SIGN LIST

- 1: Alcoholic beverage producing apparatus
- 100: Selection instruction receiving image
- 101, 102: Selection button image
- 103: Arrow image
- 104: Character button image
- 105: Message displaying column
- 11: Operation unit
- 110: Work procedure displaying screen
- 111: Message displaying column
- 112: Providing vessel displaying column
- 113: Number-of-input-ice-cubes displaying column
- 114: Start instruction receiving image
- 115,116: Additional button image
- 117: Completed image displaying column
- 12: Input device
- 13: Liquid crystal display
- 14: LED
- 15: Setting part
- 16: Delivery port
- 2: Control unit
- 20: CPU
- 200: Data acquisition unit
- 201: Display control unit
- 202: Making control unit
- 203: Administration unit
- 21: ROM
- 210: Program
- 22: Storage device
- 220: Menu database
- 221: Selection instruction data
- 222: Start instruction data
- 223: History data
- 224: Alarm data
- 8: Liquid substance
- 9: Providing vessel

### DESCRIPTION OF EMBODIMENT

Preferred embodiments of the present invention will be described in detail below with reference to the attached drawings.

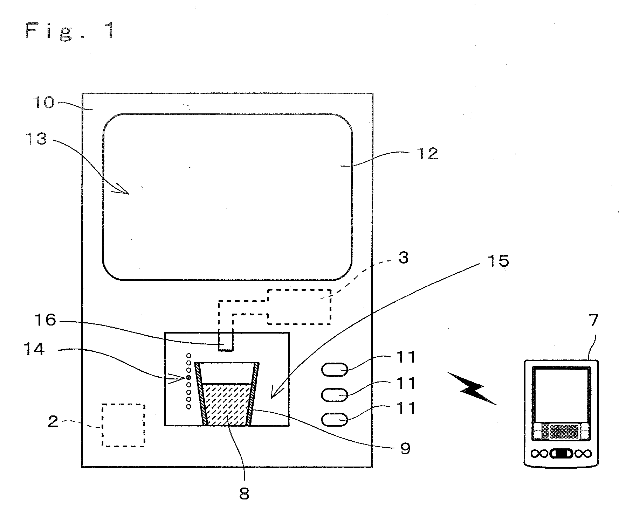

FIG. 1 is a view illustrating an alcoholic beverage producing apparatus 1. In the description below, a person who operates and uses the alcoholic beverage producing apparatus 1 is called a "user". A clerk, a maintenance worker, et al. correspond to the user, for example. In FIG. 1, in order to show a content substance (a liquid substance 8), a providing vessel 9 is illustrated in a cross section for convenience. In this preferred embodiment, an input vessel which a liquid substance 8 is put into is a providing vessel 9 (a glass or a cup) that is used when a provided substance is provided to a customer. In this way, since the liquid substance 8 (a requested liquid substance) is made directly in the providing vessel 9, the user does not need to transfer the liquid substance 8 from the input vessel to the providing vessel 9. Furthermore, description will be made on the assumption that the alcoholic beverage producing apparatus 1 is installed in a location where food and drink is provided.

A communication terminal device 7 is provided with a function that transmits order information showing the order of a customer to an output device (not shown) installed in a kitchen etc. so that the order of the customer may be confirmed in the kitchen etc. As such a device, a generally known device can be employed properly, and so detailed description is omitted here. It is just pointed out that the communication terminal device 7 is capable of wireless data communication with the alcoholic beverage producing apparatus 1.

As the output device, for example, a display (a displaying device) that displays order information, a printer (a printing device) that prints the order information to create an order sheet, or a speaker (voice reproduction device) that reproduces the order information in voice is applicable. However, the location where the alcoholic beverage producing apparatus 1 is installed does not need to be provided with all of these devices. The communication terminal device 7 may be provided with a printer that creates the order sheet.

As shown in FIG. 1, the alcoholic producing apparatus 1 comprises an approximately box-shaped housing 10, an operation unit 11, an input device 12, a liquid crystal display 13, LEDs 14, a setting part 15, and a delivery port 16. The alcoholic beverage producing apparatus 1 further comprises a control unit 2 and a making unit 3 inside the housing 10.

Although details will be described later, the alcoholic beverage producing apparatus 1 is configured as an apparatus that makes a liquid substance 8 which a user desires among alcohol-containing liquid substances 8. Moreover, it is assumed that the alcoholic beverage producing apparatus 1 can make a plurality of kinds of liquid substances 8.

Although the liquid substance 8 include liquid, it does not need to be composed by liquid only, but it may be a mixture of liquid and solids (for example, granules or ice grains etc.) or may be in a state where composing materials are separated in layers. That is, the liquid substance 8 is not limited to liquid the composition of which is uniform in the providing vessel 9, but it may be nonuniform in composition.

Moreover, although the liquid substance 8 itself contains alcohol, which is so-called a mixed liquor, it may contain liquid, which does not contain alcohol, as a material. Moreover, although the alcoholic beverage producing apparatus 1 is an apparatus that makes the liquid substance 8 containing alcohol, it may be further configured so as to be capable of making a beverage which does not contain alcohol (juices etc.). That is, the target of a beverage which alcoholic beverage producing apparatus 1 makes is not limited to the liquid substance 8. However, unless otherwise mentioned, only the liquid substance 8, i.e. an alcohol-containing liquid substance, will be described below.

The housing 10 is a member that forms the external form of the alcoholic beverage producing apparatus 1. The housing 10 is provided in order to protect an internal structure by holding or fixing each of the components which the alcoholic beverage producing apparatus 1 comprises. In particular, the housing 10 accommodates the control unit 2 inside thereof.

The operation unit 11 corresponds to various kinds of keys, buttons, switches, etc. and is hardware which a user operates in order to input various information items to the alcoholic beverage producing apparatus 1. As the operation unit 11, for example, a power button and the like are assumed, but there is no limitation to this, of course. In FIG. 1, three buttons are illustrated as an example of the operation unit 11, but the kind of and the number of the operation unit 11 are not limited to those in this example. For example, the operation unit 11 may comprise a pointing device such as a mouse.

The input device 12 is installed on the surface of the liquid crystal display 13, and is a device that detects a contact operation by a user and a contact position in the contact operation. By contacting an image displayed on the liquid crystal display 13 (in more detail, by contacting the input device 12 at a position where the image is displayed), the user can input instructions defined by the image into the alcoholic beverage producing apparatus 1. That is, the input device 12 constitutes a touch-panel type input device that receives a user's operation.

The liquid crystal display 13 is hardware that displays various information items as an image on a screen. Information (an image) displayed on the liquid crystal display 13 is visually recognized by a user and various information items are provided to the user. The liquid crystal display 13 in this preferred embodiment particularly displays an image for inputting a work procedure and instructions pertaining to a provided substance using a requested liquid substance (a liquid substance 8 which the user desires), but details will be described later.

The plurality of LEDs 14 are installed on a wall-form member arranged behind the setting part 15 in a vertical column state, and have a function that displays the position of the liquid surface of the liquid substance 8 in the providing vessel 9. In more detail, a height position required for the liquid surface is displayed depending on which LED lights among the plurality of LEDs 14 aligned in the vertical direction.

Thereby, the user can judge at a glance whether or not the content quantity of the liquid substance 8 seems to be equivalent in a provided substance provided to a customer. Therefore, there can be suppressed a customer's complaint (for example, a complaint such as "much" or "little") caused by a content quantity when it is seen differently.

The setting part 15 is a concave portion provided in the housing 10 and forms a space where the providing vessel 9 is placed.

The setting part 15 in this preferred embodiment has a floor surface on which the providing vessel 9 is set, but it may not have such a floor surface. That is, the upper surface of a setting base (not shown) on which the alcoholic beverage producing apparatus 1 is set may form a surface on which the providing vessel 9 is set, as it is. Moreover, the floor surface of the setting part 15 may be formed in a meshed shape so as to discharge a liquid (the liquid substance 8), which was spilt or scattered, downward easily and a discharge part (a pipe arrangement etc. for discharge) may be provided below the floor surface.

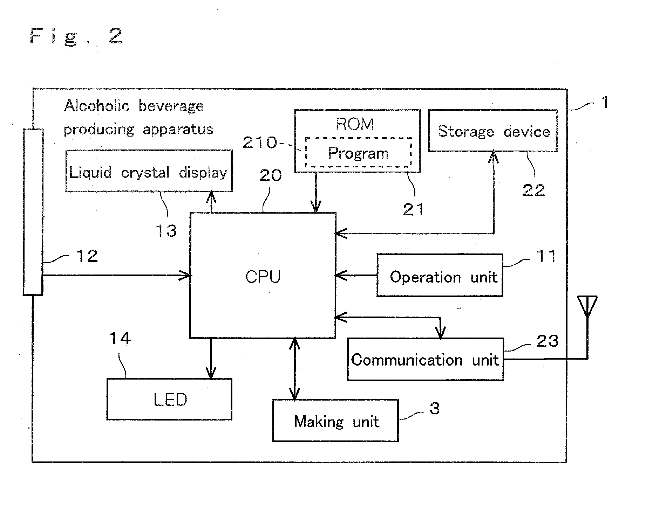

FIG. 2 is a block diagram illustrating each of the components which the alcoholic beverage producing apparatus 1 comprises. The control unit 2 comprises a CPU 20, a ROM 21, a storage device 22, and a communication unit 23, and has a configuration and a function as a common computer.

The CPU 20 controls each of the components which the alcoholic beverage producing apparatus 1 comprises, by generating a control signal while processing various kinds of information items. The operation and the function of the CPU 20 will be described in detail later.

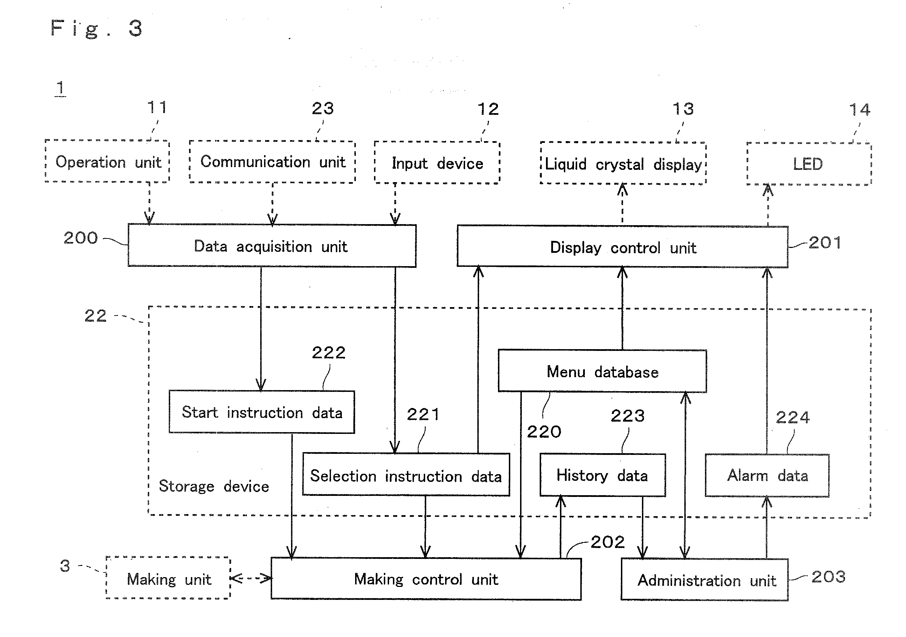

The ROM 21 is a read-only storage device and stores a program 210 executed by the CPU 20. Although it is illustrated, for the sake of explanation, that the program 210 is stored only in the ROM 21, a part of the program 210 is stored in the storage device 22 in the alcoholic beverage producing apparatus 1 in this preferred embodiment. This is because a database, which memorizes information pertaining to a plurality of kinds of provided substances and alcohol-containing liquid substances (a menu database 220 in FIG. 3), is preferably stored in the storage device 22 that can rewrite information so as to be easily updated according to the change of a menu (provided substances) in each location and the like.

The storage device 22 is the general term of a storage device that is capable of reading and writing data by the CPU 20, and does not have to necessarily be configured as a single hardware device. The storage device 22 may include a RAM with relatively small capacity and high-speed accessibility, a nonvolatile semiconductor memory, a magnetic disk with relatively low-speed accessibility and the like , or may be configured such that it can make use of a removable and portable storage medium (for example, a USB memory, an SD card, etc.). Moreover, a removable storage medium may be one that is capable of only reading data (for example, CD-ROM etc.). Furthermore, although there is a case where the CPU 20 itself actually carries a storage device with small capacity, such a case will be also included in the storage device 22 in the following description.

The communication unit 23 provides a function with which data communication is performed between the communication unit 23 and the communication terminal device 7 by means of wireless communication system. The data communication between the communications unit 23 and the communication terminal device 7 may be relayed by a repeater and a server, or a cable (wired system) may be adopted partly.

The production unit 3, although not illustrated in detail, is constituted by a tank storing a liquid material (or a cleaning liquid), an electromagnetic valve that opens and closes according to a control signal from the control unit 2, a pump driven according to a control signal from the control unit 2, a pipe arrangement forming a channel through which a liquid passes, a check valve suppressing a back flow, a flowmeter and the like.

A liquid material constituting the liquid substance 8 may be delivered from the delivery port 16 after being mixed in the making unit 3, or may be mixed in the providing vessel 9. While being mixed, each of a plurality of liquid materials may be alternatively delivered little by little. Or, without being mixed, the liquid materials may be put into the providing vessel 9 in layers and be provided. Moreover, a plurality of delivery ports 16 may be provided. Furthermore, for example, in order to suppress the scatter of liquid materials and the like, a lift mechanism may be connected with the delivery port 16 and be configured such that the delivery port 16 goes up and down during delivery operation.

FIG. 3 is a diagram illustrating functional blocks, which the alcoholic beverage producing apparatus 1 comprises, together with data flows. A data acquisition unit 200, a display control unit 201, a making control unit 202 and an administration unit 203 shown in FIG. 3 are functional blocks that are realized with the CPU 20 operating according to the program 210.

The menu database 220 shown in FIG. 3 is a table-structured database in which one record is created for each of provided substances (a menu) provided by a location where the alcoholic beverage producing apparatus 1 is installed. In each record of the menu database 220 in this preferred embodiment, an identification number (a menu number), the name of a provided substance, an input material, an input quantity, an input method, a work procedure, a ranking, and the advisability of making are associated with one another.

The identification number (the menu number) is an identifier for identifying each record from other records in the menu database 220. That is, when the identification number is specified, by searching the menu database 220 with the specified identification number used as a search key, information about a provided substance (a liquid substance 8) corresponding to the identification number can be acquired from the database 220. Although details will be described later, information included in selection instruction data 221 is an identification number selected by a user (the identification number of a requested liquid substance).

The name of a provided substance refers to the name of a provided substance using an associated liquid substance 8, that is, the name as a product in a location. For example, although names such as "Screwdriver", "Kahlua and Milk", "Red Eye" are assumed, an original name created by a location itself may be used, of course. With respect to the name of a provided substance, products having the same content substance but having different sizes may be registered as different products. For example, with respect to the same beer, there may be classification in the name such as a large beer mug and a medium beer mug. Moreover, as previously mentioned, the alcoholic beverage producing apparatus 1 can provide not only a provided substance using a alcohol-containing liquid substance but also a provided substance without a alcohol-containing liquid substance, and the name of such a provided substance can be registered.

The input material refers to information for identifying a material to be put into the providing vessel when the making unit 3 makes the liquid substance 8. The input material included in each record is referred to by the making control unit 202, and is used to determine which pump is to be driven (the driven pump is connected with a tank in which the input material is stored), or which valve of the pipe arrangement is to be opened, or the like. For example, when a provided substance is completed with a user adding a certain material to the liquid substance 8, the material added to the liquid substance 8 by the user does not mean the input material herein.

The input quantity refers to information showing a quantity for each input material that is required for making a unit of the liquid substance 8. The input quantity is referred to by the making control unit 202, and is utilized to determine the driving amount of the pump (not shown) of the making unit 3, for example. Moreover, the input quantity is also referred to by the administration unit 203.

The input method refers to information specifying how each input material is put into the providing vessel 9. For example, there is classification in the input method as follows: after mixing in the making unit 3, input is performed by delivering an input material from the delivery port 16; or an input material 1 is firstly put into the providing vessel and then another input material is softly put into the providing vessel so as to be formed in layers; or a plurality of input materials are alternatively delivered little by little so as to be mixed in the providing vessel 9.

All the "input material", "input quantity" and "input method" in each record described so far are a work procedure (a recipe) with which the making unit 3 makes a liquid substance 8. Therefore, as already described partly, these are information items which are referred to by the making control unit 202 to control the making unit 3 and which a user does not need to be aware of. That is, in the alcoholic beverage producing apparatus 1, the user does not need to have full knowledge in advance about the work procedure pertaining to the making of the liquid substance 8, and does not need to actually perform these work procedures.

The work procedure stored in each record of the menu database 220 is not a work procedure pertaining to the making of the liquid substance 8, but a work procedure (a recipe) pertaining to the making of the provided substance using the liquid substance 8. The work procedure includes information pertaining to "input vessel classification", "the number of input ice cubes", "the position of a liquid surface" and "a completed image".

The input vessel classification refers to information identifying an input vessel which the user should set in the setting part 15. With respect to the input vessel to be used for each provided substance as a product, it is determined that one input vessel is selected among those having different shapes respectively. However, it may be determined such that a common input vessel (the providing vessel 9) is used for all the provided substances.

The number of input ice cubes refers to information showing the number of ice cubes to be put into the input vessel (the providing vessel 9), which is set in the setting part 15, by the user in advance. The number of input ice cubes is determined in advance for each provided substance as a product. However, it may be determined such that a same number of ice cubes is used for all the provided substances.

The position of a liquid surface refers to information showing the position of the liquid surface of the liquid substance 8 in the providing vessel 9. Although details will be described later, in this preferred embodiment, the shape and the like of the providing vessel 9 that is used can be different for each provided substance. Moreover, there can be a difference in a content quantity and an adjunct which are assumed for each provided substance. Therefore, for each liquid substance 8, there can be a difference in the position of a liquid surface (the position of a liquid surface assumed as a provided substance) in the providing vessel 9. Accordingly, there is determined in advance the position of a liquid surface assumed as a provided substance for each liquid substance 8, which is stored as the "the position of a liquid surface" in a work procedure included in each record of the menu database 220. The position of a liquid surface is referred to by the display control unit 201, and displayed in the LEDs 14 as previously mentioned. That is, the position of a liquid surface in this preferred embodiment specifically refers to information that shows which LED is to be lit among the plurality of LEDs 14 as one indicating the position of a liquid surface.

The completed image refers to digital image data into which the finished product of a provided substance (a product in a state where it is provided to a customer) has been imaged. The completed image in this preferred embodiment is not a general image of a cocktail etc. but an image of a completed provided substance as an actual product in each location where the alcoholic beverage producing apparatus 1 is installed. As the completed image, an image inherent to each location is preferably used. That is, the provided substance as a product is made as a sample in advance in each of the locations etc., and the completed image is acquired by imaging this sample with a digital camera etc. Then, the completed image is associated with the identification number of each provided substance and is stored in the work procedure of the menu database 220.

The ranking, of a provided substance, stored in each record of the menu database 220 refers to information that is used as an index for determining the displaying position of a selection button image (shown later) corresponding to an associated liquid substance 8. The ranking in this preferred embodiment is determined by the administration unit 203 so that it may reflect popularity order (that is, order according to the number of making by the making unit 3).

The advisability of making refers to information that shows whether or not the provided substance can be made with present stocks without replenishing input materials. When the stocks of all input materials exists sufficiently enough to supply input quantities per one time, the advisability of making is judged as "proper", and otherwise as "improper".

Information stored in the menu database 220 is not limited to information shown here. For example, the price information of and the first cost information of a provided substance and the like may be stored in each record of the menu database 220. History data 223 may be stored with being associated with the menu database 220.

The data acquisition unit 200 has a function that creates various kinds of data based on input from the operation unit 11, the input device 12 or the communication unit 23. In particular, the data acquisition unit 200 creates the selection instruction data 221 and the start instruction data 222 according to input from the input device 12.

The selection instruction data 221 refers to information that specifies a liquid substance which a user desires among a plurality of kinds of liquid substances as a requested liquid substance and, specifically, this information is an identification number selected by the user. The start instruction data 222 refers to information which is inputted by the user and which performs instructions so that the making of a liquid substance 8 may be started. It is assumed that the data acquisition unit 200 in this preferred embodiment can create the selection instruction data 221 based on order information which is transmitted from the communication terminal 7 and which is received by the communication unit 23.

The display control unit 201 has a function which controls the liquid crystal display 13 and the LEDs 14 and which lets them display various information items. For example, by referring to the selection instruction data 221, the display control unit 201 searches the menu database 220 by means of an identification number, as a search key, stored in the selection instruction data 221, and acquires information, letting the liquid crystal display 13 and the LEDs 14 display the information.

In particular, the display control unit 201 acquires "the input vessel classification", "the number of input ice cubes" and "the completed image" stored as "the work procedure" from the menu database 220, and lets the liquid crystal display 13 display the acquired information suitably.

Moreover, the display control unit 201 acquires "the position of a liquid surface" stored as "the work procedure" from the menu database 220, and lets an LED 14, which corresponds to the position of a liquid surface, light among the plurality of LEDs 14. In this way, when the making unit 3 makes a liquid substance 8, the height position of the liquid surface (the position of the liquid surface) of the liquid substance 8 is displayed.

A specific example of information displayed on the liquid crystal display 13 and the LEDs 14 by the display control unit 201 will be described later.

The making control unit 202 searches the menu database 220 by means of an identification number, as a search key, shown in the selection instruction data 221, and acquires "the input material", "the input quantity" and "the input method" which are associated with the identification number, and controls the making unit 3 based on these information items. The making control unit 202 starts control for the making unit 3 at timing when the start instruction data 222 has been created. Furthermore, when the liquid substance 8 is completed by the making unit 3, the making control unit 202 additively records the identification number of the liquid substance 8 that was made (that is, the identification number shown in the selection instruction data 221) in the history data 223 as the history of making.

The administration unit 203 has a function that refers to and updates the menu database 220 based on the history data 223 created by the making control unit 202. For example, the administration unit 203 updates "the ranking" included in each record of the menu database 220 according to the number of each liquid substance 8 (an alcohol-containing liquid substance) made by the making unit 3. Or, according to the number of making and each input quantity, the administration unit 203 calculates the cumulative usage of each input material and also calculates the amount of stock of each input material, and creates alarm data 224 according to the amount of stock. With respect to a liquid substance 8 for which the amount of stock in any one of input materials does not satisfy an input quantity per one time, "the advisability of making" in the record of the liquid substance 8 is rewritten to "improper".

The administration unit 203 may have a function that updates the menu database 220 based on information inputted from the operation unit 11, the input device 12 or the communication unit 23. For example, the administration unit 203 may updates the menu database 220 based on information which the communication unit 23 has downloaded from an external maintenance server (not shown).

The above are descriptions about the configuration and the function of the alcoholic beverage producing apparatus 1. Next, descriptions will be made on the specific examples of a screen and an image displayed on the liquid crystal display 13 of the alcoholic beverage producing apparatus 1.

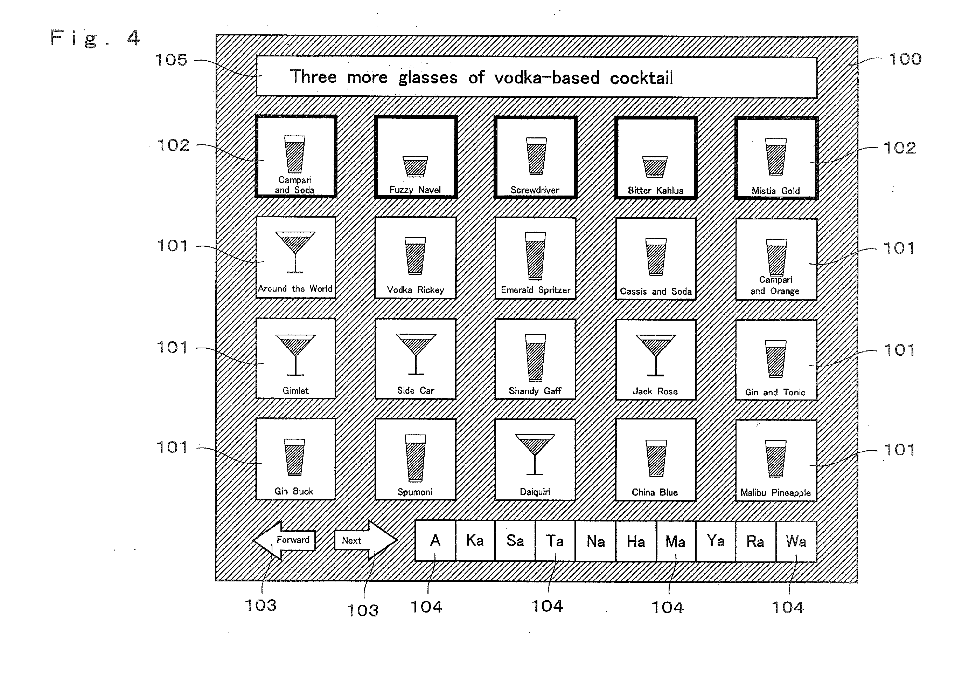

FIG. 4 is a view illustrating a selection instruction receiving image 100. The liquid crystal display 13 displays the selection instruction receiving image 100, as illustrated in FIG. 4, on a screen according to a control signal from the display control unit 201. That is, the selection instruction receiving image 100 is an image which is laid out by the display control unit 201 and which is displayed on the liquid crystal display 13.

In the example shown in FIG. 4, the selection instruction receiving image 100 includes fifteen selection button images 101 and five selection button images 102. As shown in FIG. 4, the selection button images 102, which are images emphatically decorated with a rectangular thick frame, are distinguished from the selection button images 101, but both have the same function when operated by a user.

In each of the selection button images 101, 102, a name and an appearance are represented for each provided substance using a liquid substance 8. Thereby, it is shown which provided substance (a liquid substance 8) each of the selection button images 101, 102 corresponds to. In this way, each of the selection button images 101, 102 corresponds to any one, one-on-one, among a plurality of kinds of liquid substances 8 which the alcoholic beverage producing apparatus 1 can make.

The touch-panel type input device 12 detects a user's operation to the selection instruction receiving image 100 and receives the detected information (position coordinates which a user touched) as the selection instruction information of an alcohol-containing liquid substance which the user desires. Then, the data acquisition unit 200 specifies which one among the selection button images 101, 102 was operated according to selection instruction information which the touch-panel type input device 12 has received. Furthermore, the data acquisition unit 200 creates the selection instruction data 221 based on an identification number (the identification number of the liquid substance 8) corresponding to the specified selection button image 101 or 102. That is, the selection button images 101, 102 are images for receiving selection instructions for the liquid substance 8 which the user desires among a plurality of kinds of liquid substances 8.

Each of the selection button images 101, 102 is an image created by the display control unit 201 based on "the completed image" stored in the record of the corresponding liquid substance 8 in the menu database 220 and "the name of the provided substance". In this preferred embodiment, the display control unit 201 creates the selection button images 101, 102 by thumbnail-processing registered completed images. However, other images for the selection button images 101, 102 may be registered in the menu database 220.

When the selection instruction receiving image 100 is displayed first, which selection button 101 corresponding to each liquid substance 8 is displayed is determined as initial setting in advance. Although, in this preferred embodiment, there is employed the Japanese syllabary order of the name of a provided substance using a liquid substance 8, order is not limited to this, of course. For example, order in identification numbers may be employed.

In the selection instruction receiving image 100, as shown in FIG. 4, two arrow images 103 and ten character button images 104 are laid out and displayed. These are images, which are operated by the user in order to change the provided substance (the liquid substance 8) displayed as a selection button image 101.

Specifically, when an arrow image 103 displayed as "forward" is operated, the provided substance displayed as a selection button image 101 is sequentially changed in the forward direction in the Japanese syllabary order of the name of a provided substance. Conversely, another arrow image 103 displayed as "next" is operated, the provided substance displayed as a selection button image 101 is sequentially changed in the backward direction in the Japanese syllabary order of the name of a provided substance. Moreover, when a character button image 104 is operated, change is performed as follows: a provided substance, the name of which has an initial belonging to a character row represented by the character button image 104 that has been operated, comes to the head; that is, change is performed in the way of cueing. That is, the arrow images 103 and the character button images 104 are images for selecting the provided substance displayed as a selection button image 101. In this way, the liquid crystal display 13 can change the displaying position of a plurality of selection button images 101 in the selection instruction receiving image 100.

The selection button images 102 are images which are displayed according to a ranking in each record of the menu database 220. In the example shown in FIG. 4, five selection button images 102 are displayed, and these shows that liquid substances 8, which are the top five in the ranking, are displayed according to their order. That is, the example shown in FIG. 4 indicates that "Campari and Soda" is the first place and that "Fuzzy Navel" is the second place and that "Mistia Gold" is the fifth place.

As already described, the "ranking" in the menu database 220 is changed by the administration unit 203 at any time. Referring to the "ranking" changed by the administration unit 203 at any time, the display control unit 201 determines the layout of the selection instruction receiving image 100 (an image displayed as the selection button image 102 is determined), and controls the liquid crystal display 13. Therefore, the liquid crystal display 13 can change the displaying position of a plurality of selection button images 102 in the selection instruction receiving image 100.

In addition, since the "ranking" is changed according to the frequency of making, the liquid crystal display 13 can change the displaying position of a selection button image 102 according to the frequency of making for each of the plurality of kinds of liquid substances 8. Thereby, according to the frequency of making (that is, according to the height of the frequency of making), the displaying position of a selection button image 102 can be customized to a position immediately operable (for example, a position displayed in the initial state of the selection instruction receiving image 100, or a position always displayed), which improves the efficiency of selection work by the user. Moreover, as a secondary effect, the user can immediately grasp the popularity ranking of provided substances in the location, also being able to recommend a popular provided substance to a customer.

In the example shown in FIG. 4, a provided substance (a liquid substance 8) being currently displayed as a selection button image 102 is not displayed as a selection button image 101. Thereby, the kind of a liquid substance 8 simultaneously displayed on the screen can be increased, which can suppress the number of operation of the arrow images 103 and the character button images 104. However, the same provided substance may be duplicatedly displayed in the selection button images 101 and the selection button images 102, of course. For example, since the selection button images 102 changes according to popularity at any time, it is difficult to memorize the position of a certain selection button image. On the other hand, since which neighborhood a given selection button image 101 is displayed in is predictable to some extent, the selection button images 101 that are displayed in a fixed order can be more convenient for an experienced user.

A message displaying column 105 is provided in the selection instruction receiving image 100, as shown in FIG. 4. The message displaying column 105 is mainly used as a column where the content of the alarm data 224 is displayed. However, information items other than the alarm data 224 may be displayed.

In the example shown in FIG. 4, there is displayed a message saying "three more glasses of vodka-based cocktail", which shows that the stock of vodka as an input material has decreased and that if three more glasses of a liquid substance 8 using vodka as an input material is made the stock of vodka will expire (vodka will go out of stock). In this way, in the alcoholic beverage producing apparatus 1, the administration unit 203 administers the stock quantities of input materials and creates the alarm data 224 based on the number of making for each liquid substance 8 shown in the history data 223, the input material and the input quantity of each liquid substance 8 stored in the menu database 220. Then, the display control unit 201 lets the liquid crystal display 13 display the alarm data 224 created by the administration unit 203 as the selection instruction receiving image 100.

Thereby, the user can easily confirm that there is an input material with less stock and that replenishment is necessary before the input material actually goes out of stock. Moreover, with the stock quantity of an input material not being displayed directly in a numerical value but being shown in the number of a provided substance (a liquid substance 8) that can be made, there is also an effect that the user can instinctively understand the urgency of replenishment. With respect to the display of the alarm data 224 in the message displaying column 105, an outstanding display mode such as red character display and blinking display is preferable as an alarm. When the alarm data 224 is displayed, the display mode of the message displaying column 105 itself may be changed.

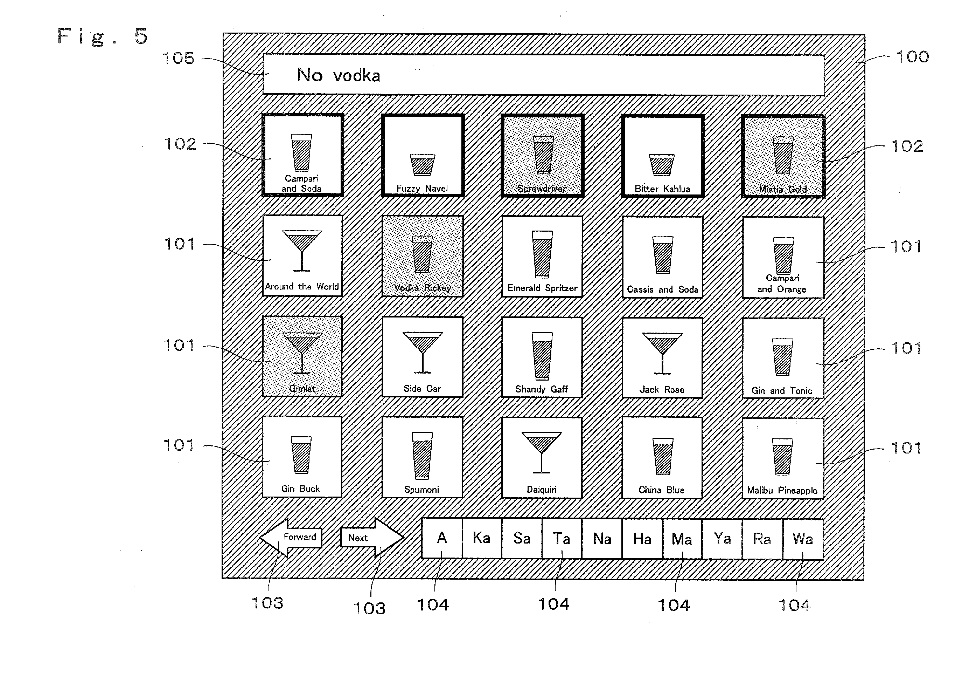

FIG. 5 is a view illustrating the selection instruction receiving image 100. In the example shown in FIG. 5, there is displayed a message saying "no vodka" in the message displaying column 105, which shows that vodka as an input material has already gone out of stock.

Among selection button images 101, 102, the selection button images 101, 102 of provided substances using vodka as the input material are in the state of blackout. This display state is different from a normal display state (at the time of a selectable state). The display control unit 201 lets the selection button images 101, 102 of liquid substances 8, which have been judged as "improper" in the "advisability of making" of each record stored in the menu database 220, go into the state of blackout. Therefore, the liquid crystal display 13 can display the selection instruction receiving image 100 according to whether or not each of the plurality of kinds of liquid substances 8 can be made.

Thereby, the user can easily judge whether or not each liquid substance 8 (a provided substance) can be made, depending on whether or not the selection button images 101, 102 are in the state of blackout. With respect to the selection button images 101, 102 that are in the state of blackout, even if the corresponding position in the input device 12 is touched, the input of selection instructions is prohibited (in that sense, the function as a selection button is temporarily lost.). Moreover, at this time, in the communication terminal device 7, there may be display showing that the order of the liquid substances 8 is not accepted.

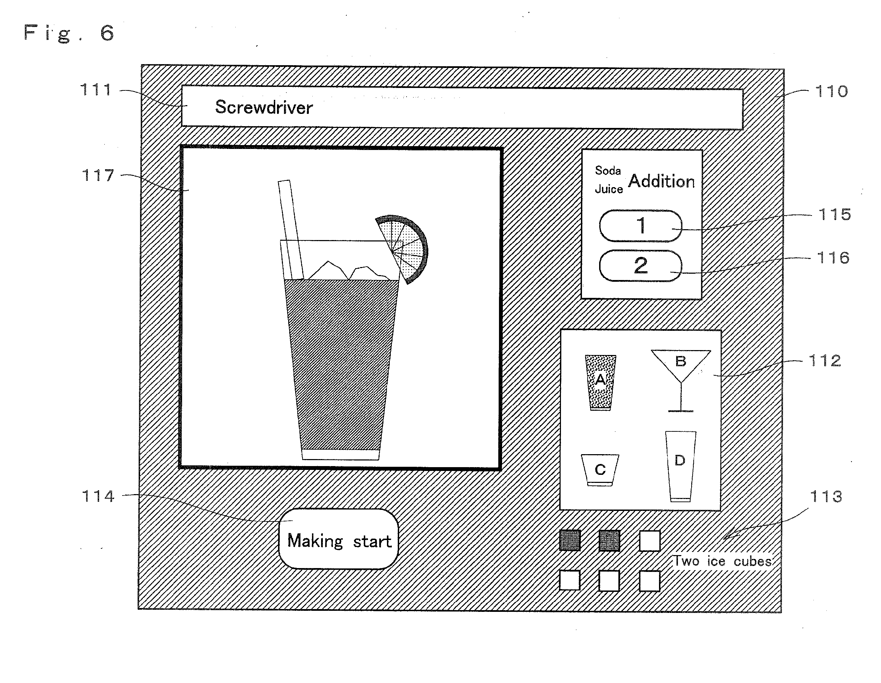

FIG. 6 is a view illustrating the work procedure displaying screen 110 of a "screwdriver".

As shown in FIG. 6, a message displaying column 111, a providing vessel displaying column 112, and a number-of-input-ice-cubes displaying column 113 are laid out in the work procedure displaying screen 110. Moreover, a start instruction receiving image 114 and additional button images 115, 116 are provided as operable images in the work procedure displaying screen 110. The work procedure displaying screen 110 is a screen that is displayed on the liquid crystal display 13 according to the control of the display control unit 201.

With a selection button image 101 or a selection button image 102 operated in the message displaying column 111 or in the selection instruction receiving image 100, the name of a provided substance selected by the user is displayed. In more detail, by using an identification number, as a search key, shown in the selection instruction data 221, the display control unit 201 acquires "the name of a provided substance" associated with the identification number from the menu database 220, and lets the message displaying column 111 display "the name of a provided substance". The same thing happens when a provided substance is selected in the communication terminal device 7. By visually recognizing the message displaying column 111, the user can confirm whether a provided substance that is going to be made is in agreement with a customer's order.

The providing vessel displaying column 112 is a column that displays "the input vessel classification" associated with an identification number shown in the selection instruction data 221 in the menu database 220. In this preferred embodiment, as already described, all the input vessels are providing vessels. In the example shown in FIG. 6, there is displayed a possibility showing that four kinds of glasses (A, B, C, D) are used as an input vessel, and it is emphatically displayed that the glass "A" is used for a "Screwdriver".

Therefore, by visually recognizing the providing vessel displaying column 112, the user understand that he/she should prepare the glass "A" as the providing vessel 9. The work procedure for preparing a suitable providing vessel 9 is a work procedure that should be performed by the user before the making of a provided substance 8 is started.

In this way, since the alcoholic beverage producing apparatus 1 displays the input vessel classification in the providing vessel displaying column 112, the user can easily understand and perform a work procedure which the user oneself should perform before starting the making of a liquid substance 8. Since the alcoholic beverage producing apparatus 1 in this preferred embodiment, as will be described later, displays a completed image in a completed image displaying column 117, which glass is to be used as the providing vessel 9 can be confirmed with the completed image. In this preferred embodiment, the selection button images 101, 102 are thumbnail-processed completed images (that is, images in which glasses that are going to be used are imaged). Therefore, before the work procedure displaying screen 110 is displayed, a relatively experienced user can already know which glass is the providing vessel 9 when he/she operates a selection button image 101 or 102 in the selection instruction receiving image 100.

The number-of-input-ice-cubes displaying column 113 is a column that displays "the number of input ice cubes" associated with an identification number shown in the selection instruction data 221 in the menu database 220. In this preferred embodiment, with a required number of rectangles among six rectangles representing six ice cubes emphatically displayed and together with a text message displayed, the number of input ice cubes is displayed.

In this way, by confirming the number of input ice cubes displayed in the number-of-input-ice-cubes displaying column 113, the user can easily grasp the number of ice cubes to be put into a glass (a providing vessel 9) set in the setting part 15, and can certainly put the required number of ice cubes into the glass. The work procedure that puts an appropriate number of ice cubes into the providing vessel 9 set in the setting part 15 is a work procedure that should be performed by the user before the making of the liquid substance 8 is started.

The start instruction receiving image 114 is an image for receiving the making starting instruction of the liquid substance 8 by the user. In this way, by displaying the work procedure displaying screen 110, the liquid crystal display 13 displays the start instruction receiving image 114 for receiving the making starting instruction of the liquid substance 8 by the user. Then, the touch-panel type input device 12 detects a user's operation to the start instruction receiving image 114, and receives the detected information (position coordinates) as the making starting instruction information of the liquid substance 8. Thereby, the data acquisition unit 200 creates the start instruction data 222. That is, at timing when the start instruction receiving image 114 is operated by the user, the start instruction data 222 is created by the data acquisition unit 200, and the making control unit 202 lets the making unit 3 start the making of the liquid substance 8.

The additional button images 115, 116 are button images with which the user instructs the alcoholic beverage producing apparatus 1 (the making control unit 202) to add sodas or juices when there seems to be a small quantity of the liquid substance 8 relative to the glass. In this preferred embodiment, the additional button image 115 is one for the instruction of adding a quantity of 5 ml, and the additional button image 116 is one for the instruction of adding a quantity of 10 ml. Sodas or juices added by operating the additional button images 115, 116 are preferably the input materials of a liquid substance 8.

The completed image displaying column 117 is a column that displays "the completed image" associated with an identification number shown in the selection instruction data 221 in the menu database 220. Since the completed image is an image that represents the completed state of the provided substance as a product, it includes a dishing work procedure to the liquid substance 8 for completing the provided substance. In the example of FIG. 6, with respect to the "Screwdriver" as a product, the provided substance is completed with being represented in a state where an orange slice and a straw are attached to the liquid substance 8. Therefore, by visually recognizing the completed image displaying column 117, the user can grasp the dishing work procedure after the provided substance is completed. As an adjunct for dishing to the liquid substance 8, citrus fruits and fruits such as a cherry and an olive, and tools such as a straw and a muddler are assumed, but there is no limitation to these.

Next, descriptions will be made on a process flow from time when the liquid substance 8 is put into the providing vessel 9 until time when the provided substance is completed by the alcoholic beverage producing apparatus 1.

First, according to the order of a customer, the user operates any one of the selection button images 101, 102 displayed in the selection instruction receiving image 100 (see FIG. 4 or FIG. 5), and thereby the work procedure displaying screen 110 is displayed. In an example shown in FIG. 6, a "Screwdriver" is ordered by the customer, the user operates the selection button image 101 (or the selection button image 102) of the "Screwdriver", and thereby the work procedure displaying screen 110 of the Screwdriver is displayed.

When the work procedure displaying screen 110 is displayed, the user confirm a message (the name of a provided substance) displayed in the message displaying column 111 of the work procedure displaying screen 110 and also confirms whether or not the message is in agreement with the order of the customer. If there is no error, the user visually recognizes the providing vessel displaying column 112, and takes the providing vessel 9 (the glass "A" in the example shown in FIG. 6), which is emphatically displayed in the providing vessel displaying column 112, in his/her hand for preparation. Then, after visually recognizing the number-of-ice-cubes displaying column 113, the user puts ice cubes of a number displayed in the number-of-ice-cubes displaying column 113 (two ice cubes in the example shown in FIG. 6) into the prepared providing vessel 9, and sets the providing vessel in the setting part 15. Thereby, a work procedure is completed, which should be performed by the user before the making of the liquid substance 8 is started.

When the preparation work procedure is completed, the user operates the start instruction receiving image 114 to issue instruction for starting the making of the liquid substance 8. Thereby, the input material is delivered from the delivery port 16 into the providing vessel 9, and the liquid substance 8 is made.

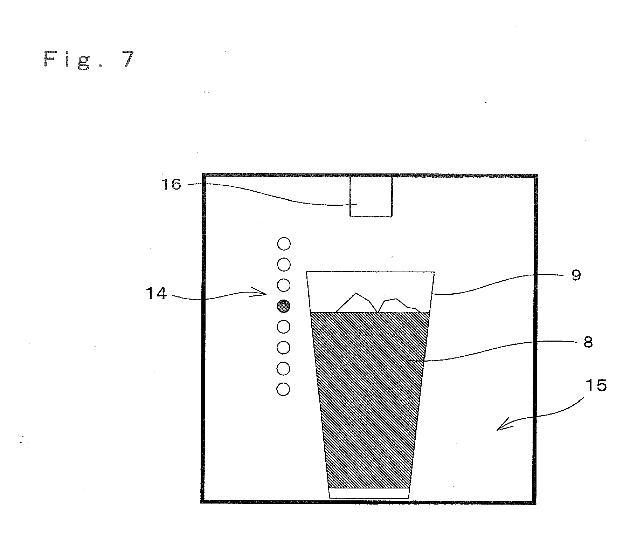

FIG. 7 is a view illustrating a state where the liquid substance 8 has been made in a setting part 15. FIG. 7 illustrates a state where the liquid substance 8 used for the "Screwdriver" as the provided substance has been made.

As the liquid substance 8 has been made, the user visually recognizes the plurality of LEDs 14 provided in the setting part 15, and compares an LED 14 that is lighting with the position of the liquid surface of the liquid substance 8 that has actually been made. When the position of the liquid surface of the liquid substance 8 is lower than the height position of the LED 14 that is lighting, the user operates the additional button image 115 or the additional button image 116 so that the position of the liquid surface of the liquid substance 8 may be adjusted to the same position as the height position of the LED 14 that is lighting (or may be adjusted to a position higher than the height position of the LED 14 that is lighting). In this way, with the content quantity of the liquid substance 8 confirmed and adjusted by the user, the liquid substance 8 is completed.

As the liquid substance 8 has been completed, the user visually recognizes the completed image displaying column 117 displayed on the work procedure displaying screen 110, and prepares a required adjunct and dish it up in the providing vessel 9 taken out from the setting part 15. In the example shown in FIG. 6, an orange slice and a straw have been prepared and dished up. In this way, with the completed image showing a dished-up state displayed, the user can easily grasp the work procedure for completing the provided substance and also, in particular, can grasp the dishing work procedure.

In this way, as the provided substance has been completed, the user provides the provided substance to the customer.

As described so far, there exist various work procedures (so to speak, a whole work procedure) such as preparation of an input vessel, measuring of a material, input, dishing, etc. in order to complete a provided substance as a product. As a matter of course, it is conceivable that as many work procedures as possible are automated in such a whole work procedure and that work procedures which cannot be automated are omitted or neglected.

However, more suitably, it is preferred that the whole work procedure is properly classified into work procedures which should be automated and work procedures which are left to the user and that the apparatus and the user efficiently share the whole work procedure with each other. If needs in a location are carefully examined, it is understood as follows: preferably, a work procedure which the apparatus should bear is a work procedure where speeding up can be attained in an automated manner than in a manual manner or a work procedure which exists commonly for many provided substances. Moreover, a work procedure, which requires special hardware causing large cost increase of an apparatus itself, may be preferably left to the user (or omitted).

In this way, the alcoholic beverage producing apparatus 1 is designed based on a design concept that automation is not to be applied to any work procedures but is to be applied intensively to work procedures in which automation brings large advantage. Therefore, the alcoholic beverage producing apparatus 1 has a feature that cost effectiveness is much higher if compared with a conventional technology.

Moreover, what should be emphasized is that the alcoholic beverage producing apparatus 1 is designed from a viewpoint which accepts the existence of a work procedure unsuitable for automation and leaves such a work procedure to a user. Of course, although there existed a work procedure that could not be automated in a conventional technology, with respect to such a work procedure, no measures was taken in an apparatus itself in a conventional technology, which lacked in consideration. However, the alcoholic beverage producing apparatus 1 is designed so that it may positively provide information to a user and support the user for a work procedure which is left to the user. Therefore, the user can easily understand the existence of a work procedure which is left to him/her and what the work procedure is like. That is, even if the user does not have special knowledge, he/she can easily understand and perform the work procedure which is left to him/her, and can complete a provided substance as a product correctly and promptly.

As described above, the alcoholic beverage producing apparatus 1 that makes a plurality of kinds of liquid substances 8 comprises: the data acquisition unit 200 that specifies a liquid substance 8, which a user desires among the plurality of kinds of liquid substances 8, as a requested liquid substance; and the liquid crystal display 13 and the LEDs 14, both of which display a work procedure pertaining to a provided substance using the requested liquid substance. This apparatus enables the user to grasp easily the work procedure pertaining to the provided substance. Thus, anyone can complete the provided substance correctly and quickly.

Moreover, since a work procedure displayed on the liquid crystal display 13 includes a work procedure that should be performed by the user before the making of the requested liquid substance is started, the user can grasp the work procedure of a preparatory step.

Moreover, since the work procedure displayed on the liquid crystal display 13 includes a dishing work procedure, for the requested liquid substance, for completing the provided substance, the user can grasp easily the dishing work procedure.

Moreover, since the work procedure displayed on the liquid crystal display 13 includes the completed image of the provided substance, the user can grasp more easily the work procedure for completing the provided substance.

Moreover, since an input vessel is the providing vessel 9 that is used when the provided substance is provided, the requested liquid substance is made directly in the providing vessel 9, which does not require a transfer work for transfer to the providing vessel 9 by the user.

Moreover, since a work procedure displayed in the LEDs 14 includes the position of a liquid surface in the providing vessel 9, the user can judge at a glance whether or not the content quantity seems to be equivalent, which reduces customer's complaints.

Moreover, since the alcoholic beverage producing apparatus 1 further comprises the touch-panel type input device 12, operability is improved and additionally change such as the change of a menu can be easily performed according to the situation of a location.

Moreover, the liquid crystal display 13 displays the start instruction receiving image 114 for receiving the making starting instruction of the requested liquid substance by the user, and the touch-panel type input device 12 detects the user's operation for the start instruction receiving image 114 and receives the detected information as the making starting instruction information of the requested liquid substance. With these functions, operability is improved.

Moreover, the liquid crystal display 13 displays the selection instruction receiving image 100 for receiving a selection instruction for a liquid substance 8 which the user desires among a plurality of kinds of liquid substances 8, and the touch-panel type input device 12 detects a user's operation for the selection instruction receiving image 100 and receives the detected information as the selection instruction information of the liquid substance 8 which the user desires, and the data acquisition unit 200 specifies the liquid substance 8 which the user desires according to the selection instruction information which the touch-panel type input device 12 has received. Also with these functions, operability by the user is improved.

Moreover, the selection instruction receiving image 100 includes a plurality of selection button images 101, 102 corresponding to the plurality of kinds of liquid substance 8 one-on-one, and the liquid crystal display 13 can change the displaying position of the plurality of selection button images 101, 102 in the selection instruction receiving image 100. With these functions, operability as well as versatility is improved.

Moreover, since the liquid crystal display 13 changes a displaying position according to the frequency of making for each of the plurality of kinds of liquid substances 8, the displaying position of the selection button images 101, 102 can be customized according to the frequency of making. With this function, work efficiency is improved.

Moreover, since the liquid crystal display 13 displays the selection instruction receiving image 100 (the selection button images 101, 102) according to whether or not each of the plurality of kinds of liquid substances 8 can be made, whether making is possible or not can be easily understood. With this function, work efficiency is improved.

Although the preferred embodiment of the present invention has been described so far, the present invention is not limited to the above preferred embodiment and can be modified in various ways.

For example, an adjunct such as a straw does not necessarily have to be dished up, and may be added at the same time when the provided substance as a product is provided.

Moreover, instead of the LEDs 14, a liquid crystal panel or a plurality of lamps arranged at predetermined intervals in the perpendicular direction may be provided, which enables similar display. However, since a part that displays the position of a liquid surface is placed at the inner portion of the setting part 15, it is preferable to use what a user can visually recognize easily if the apparatus is placed in a relatively dark place.

Moreover, the position of a pump which the making unit 3 is provided with is preferably changed according to the properties of a liquid which the pump carries and the like. In particular, since a liquid with high viscosity (gum syrup, Kahlua, etc.) requires a large suction force, it is difficult to perform long-distance suction with a small pump. Therefore, for example, a pump that carries a liquid with high viscosity is preferably placed near the bottle of the liquid.

Moreover, although an example is described in the above embodiment where a making unit 3 with only one system is mounted, a making unit 3 with two or more systems may be mounted. Generally, control by the CPU 20 is completed in time shorter than time required for making one liquid substance 8. Therefore, even if it is configured that multiple systems are controlled by the CPU 20, it does not happen that the control by the CPU 20 is congested. Thereby, since a plurality of liquid substances 8 can be made simultaneously, work efficiency for completing a product can be improved. In particular, since a human has two arms, if two liquid substances 8 are almost simultaneously made by a making unit 3 with two systems, he/she can simultaneously carry the liquid substances 8 in both hands respectively, which is quite preferable.

Moreover, the alcoholic beverage producing apparatus 1 may be provided with a sensor that detects whether or not an input vessel is set in the setting part 15. It may be configured that the existence of the input vessel is judged by the sensor and that the making of the liquid substance 8 is not started when the input vessel is not set. That is, preferably, in a state where the input vessel is not set in the setting part 15, making is not started (the making starting instruction is not inputted) even if the start instruction receiving image 114 is operated. At this time, the start instruction receiving image 114 may not be displayed or the start instruction receiving image 114 may be displayed in dark change display (inactive display). Furthermore, there may be displayed a message urging that the input vessel is set. Yet furthermore, once an input vessel is set and after the liquid substance 8 is put into the input vessel, whether or not the input vessel was carried out of the setting part 15 may be judged by the sensor (whether or not there once happened a shift to a state where the input vessel does not exist). That is, it may be configured so that the liquid substance 8 may not be successively put into the same input vessel.

Moreover, in the above embodiment, it was described that there were provided the additional button images 115, 116 functioning as images that input instructions to add the quantities of 5 ml and 10 ml, respectively. However, a quantity to be added may not be determined in advance. That is, there may be provided an additional button image that inputs an instruction to successively add a small quantity of a liquid while a user is performing operation. When such a configuration is empoyed, the user may just stop operating the additional button image when the quantity of the liquid substance 8 reaches a required one.

## Claims

1. An alcoholic beverage producing apparatus for making a plurality of kinds of alcohol-containing liquid substances comprising:
a specifying element that specifies an alcohol-containing liquid substance which a user desires among the plurality of kinds of alcohol-containing liquid substances as a requested liquid substance; and
a displaying element that displays a work procedure pertaining to a provided substance using the requested liquid substance.

2. The alcoholic beverage producing apparatus according to claim 1, wherein
a work procedure displayed on the displaying element includes a work procedure that should be performed by a user before making of the requested liquid substance is started.

3. The alcoholic beverage producing apparatus according to claim 1, wherein
a work procedure displayed on the displaying element includes a dishing work procedure, for the requested liquid substance, for completing the provided substance.

4. The alcoholic beverage producing apparatus according to claim 1, wherein
a work procedure displayed on the displaying element includes a completed image of the provided substance.

5. The alcoholic beverage producing apparatus according to claim 1, wherein
an input vessel is a providing vessel that is used when the provided substance is provided.

6. The alcoholic beverage producing apparatus according to claim 5, wherein
a work procedure displayed on the displaying element includes a position of a liquid surface in the providing vessel.

7. The alcoholic beverage producing apparatus according to claim 1, further comprising a touch-panel type input device.

8. The alcoholic beverage producing apparatus according to claim 7, wherein
the displaying element displays a start instruction receiving image for receiving a making starting instruction of the requested liquid substance by a user,
the touch-panel type input device detects a user's operation for the start instruction receiving image and receives the detected information as making starting instruction information of the requested liquid substance.

9. The alcoholic beverage producing apparatus according to claim 7, wherein
the displaying element displays a selection instruction receiving image for receiving a selection instruction for an alcohol-containing liquid substance which a user desires among the plurality of kinds of alcohol-containing liquid substances,
the touch-panel type input device detects a user's operation for the selection instruction receiving image and receives the detected information as selection instruction information of an alcohol-containing liquid substance which the user desires,
the specifying element specifies the requested liquid substance according to selection instruction information which the touch-panel type input device has received.

10. The alcoholic beverage producing apparatus according to claim 9, wherein
the selection instruction receiving image includes a plurality of selection button images corresponding to the plurality of kinds of alcohol-containing liquid substances one-on-one,
the displaying element can change a displaying position of the plurality of selection button images in the selection instruction receiving image.

11. The alcoholic beverage producing apparatus according to claim 10, wherein
the displaying element changes the displaying position according to frequency of making for each of the plurality of kinds of alcohol-containing liquid substances.

12. The alcoholic beverage producing apparatus according to claim 9, wherein
the displaying element displays the selection instruction receiving image according to whether or not each of the plurality of kinds of alcohol-containing liquid substances can be made.

13. A recording medium having a program recorded thereon, a computer with a displaying element being able to read the program, the program is executed by the computer such that the computer comprises:
a specifying element that specifies an alcohol-containing liquid substance which a user desires among a plurality of kinds of alcohol-containing liquid substances as a requested liquid substance; and
a display controlling element that lets the displaying element display a work procedure pertaining to a provided substance using the requested liquid substance, wherein
the computer functions as an alcoholic beverage producing apparatus for making the plurality of kinds of alcohol-containing liquid substances.
